# DEMANDE DE BREVET EUROPEEN

(11) **EP 0 981 942 A1**
(43) Date de publication de la demande: **01.03.2000**
(21) Numéro de dépôt: 98870182.7
(22) Date de dépôt: 26.08.1998
(51) Int. Cl.: A01D 34/00

(54) **Bacs collecteurs de tondeuses a gazon du type tondeuses a siege ou tondeuses autoportees**

(71) Demandeur: Eurocraft N.V., 3080 Tervuren (BE)
(72) Inventeur: Meyerkort, Thies Ottmar, 3080 Tervuren (BE)
(74) Mandataire: Van Malderen, Michel

(57) **Abrégé**

La présente invention concerne un bac collecteur qui est destiné aux tondeuses à gazon à siège ou tondeuses autoportées.

La partie supérieure du bac est disposée dans un plan dont l'inclinaison correspond sensiblement à l'angle par rapport au plan des roues que forme la gaine (canal d'éjection) (9) par laquelle de l'herbe coupée par les lames de coupe est expulsée depuis les lames de coupe vers le bac collecteur (3). De préférence, le bac est conçu de manière à comporter un fond escamotable qui facilite la libération de l'herbe coupée lorsque l'on souhaite vider le bac collecteur.

La forme d'exécution permet d'accroître sensiblement, pour un même porte-à-faux par rapport à la tondeuse, le volume du bac collecteur et facilite le montage du fond escamotable. De plus, la qualité de la coupe est sensiblement améliorée.

## Description

### Objet de l'invention

La présente invention concerne des bacs collecteurs destinés à recueillir l'herbe coupée et qui sont conçus pour les tondeuses à gazon du type tondeuses a siège ou tondeuses autoportées, c'est-à-dire des tondeuses à gazon sur lesquelles l'opérateur est assis (qui sont parfois appelées "tracteurs").

Elle concerne plus spécialement des bacs collecteurs perfectionnés en ce sens que leur forme et leur conception permettent un remplissage plus complet et offrent une capacité de remplissage plus élevée que les bacs collecteurs de conception classique.

Moyennant quelques adaptations mineures des systèmes d'accrochage, les bacs collecteurs selon l'invention peuvent être considérés comme pratiquement universels, puisqu'ils peuvent s'adapter à la plupart des tondeuses à gazon du type précité existant sur le marché dans lesquelles l'éjection de l'herbe coupée s'effectue vers l'arrière.

### Arrière-plan technologique

Les tondeuses à gazon du type tondeuses à siège ou tondeuses autoportées sont généralement équipées d'un bac collecteur disposé à l'arrière de la tondeuse. Les lames de coupe situées centralement entre les roues sont conçues de manière que l'herbe qui est coupée au maximum à quelques centimètres du sol soit projetée vers l'arrière du véhicule dans une gaine qui passe, en montant, entre les roues arrière sous le siège du conducteur et débouche à la partie supérieure d'un bac collecteur accroché à la carrosserie arrière de la tondeuse.

Généralement, les bacs collecteurs sont suspendus à des points de fixation et, lorsque le bac est rempli, le plus souvent il convient de le vider en le soulevant.

Ceci requiert une certaine force physique, et de toute manière un effort important.

Afin de limiter cet effort, les bacs collecteurs sont souvent de volume restreint, pour que le poids de l'herbe accumulée ne soit pas trop important.

Dans certains cas, une fenêtre munie d'un plexiglas est prévue sur la partie supérieure du bac collecteur, afin de permettre à l'opérateur de se rendre compte du taux de remplissage du bac.

On connaît également des tondeuses du type précité à éjection latérale. Dans ce cas, l'herbe coupée est alors le plus souvent simplement projetée sur le sol. L'invention ne concerne pas cette classe de tondeuses plus généralement utilisée aux Etats-Unis.

### Etat de la technique

La société demanderesse s'est aperçue que la facilité d'utilisation des bacs collecteurs pouvait être améliorée en prévoyant d'équiper le bac d'un fond escamotable, manoeuvrable grâce à une commande depuis le siège du conducteur.

Cette forme d'exécution qui a fait l'objet de la demande de brevet européen 96870107.8 du 21.08.1996 (EP-0 824 853-A) facilite grandement l'utilisation des tondeuses à gazon.

Les bacs collecteurs sont cependant encore de capacité relativement limitée, ce qui oblige l'opérateur de la tondeuse, après un temps de coupe relativement court, à se déplacer vers l'endroit prévu pour décharger l'herbe coupée, pour y vider le bac collecteur.

On comprendra que de manière générale, l'augmentation du volume disponible pour le bac collecteur et un remplissage qui serait plus complet, combinés à une plus grande rapidité et une plus grande facilité de déchargement, contribuent grandement à la vitesse et à la facilité d'utilisation.

Cette solution est particulièrement intéressant dans le cas d'un bac collecteur à fond escamotable.

### Brève description des figures

- La figure 1: représente une vue de côté, légèrement en perspective, d'une tondeuse équipée d'un bac collecteur selon l'invention en position fermée.
- La figure 2: représente une vue en perspective franche équivalente à celle de la figure 1 avec le même bac collecteur cette fois en position ouverte.

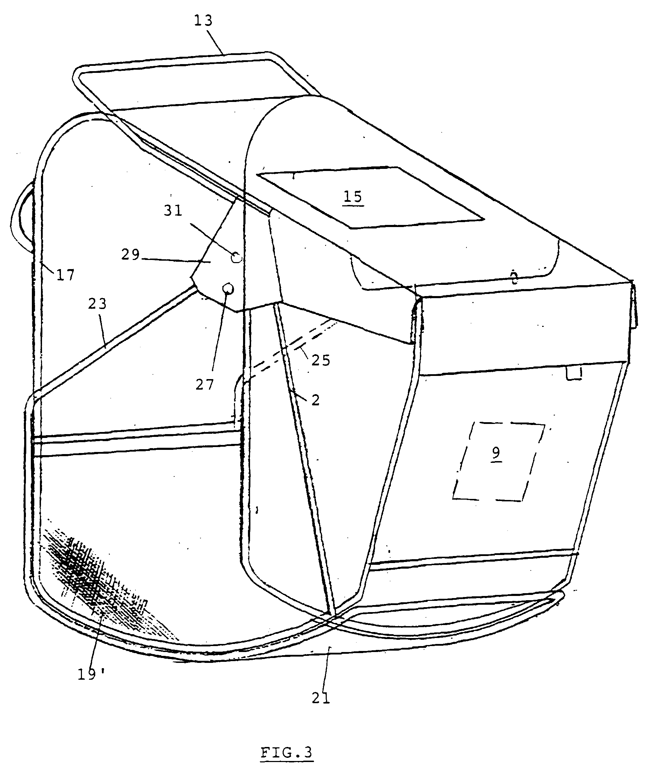

- La figure 3: représente schématiquement les éléments constitutifs du bac collecteur.

Dans les différentes figures, des repères de référence identiques sont utilisés pour des éléments identiques ou similaires.

### Buts de l'invention

La présente invention vise de manière générale à proposer un bac collecteur amélioré garantissant un meilleur remplissage et une plus grande facilité d'utilisation que les solutions connues de l'état de la technique.

On vise en particulier, pour un volume identique, à assurer un remplissage plus complet du bac collecteur lors de l'utilisation de la tondeuse.

Pour un même porte-à-faux ou "débordement" du bac collecteur par rapport à la tondeuse autoportée, on vise à disposer d'un plus grand volume.

A titre complémentaire, dans le cas d'un bac collecteur à fond escamotable qui constitue la forme d'exécution préférée de l'invention, on vise encore à faciliter l'évacuation des herbes coupées.

D'autres buts et avantages de l'invention apparaîtront à la lumière de la description qui suit.

### Principaux éléments caractéristiques de l'invention

Le bac collecteur de l'invention est caractérisé en ce que sa partie supérieure est disposée dans un plan dont l'inclinaison correspond sensiblement à l'angle par rapport au plan des roues que forme la gaine (le canal d'éjection) par laquelle l'herbe coupée par les lames de coupe est expulsée depuis les lames de coupe vers le bac collecteur.

Contrairement aux solutions connues, dans lesquelles la partie supérieure est sensiblement parallèle au plan des roues, c'est-à-dire horizontale lorsque la tondeuse se trouve sur un sol horizontal, et dans lesquelles l'herbe expulsée frappe de ce fait le "plafond" du bac pour tomber ensuite, l'herbe selon l'invention atteint le fond arrière sensiblement vertical du bac. On assure ainsi donc non seulement un remplissage plus complet mais on dispose d'un volume accrû pour le même porte-à-faux par rapport à l'arrière de la tondeuse.

Dans les solutions connues, l'air qui sort du canal d'éjection est propulsé vers le "plafond" du bac. Selon l'invention, l'air éjecté suit l'angle du bac et est donc propulsé vers la plaque arrière, ce qui permet un écoulement d'air plus libre. De ce fait, l'air qui sort du canal plus facilement augmente sensiblement l'effet d'aspiration, ayant pour conséquence que l'herbe à couper se lève, ce qui permet de réaliser une coupe de meilleure qualité.

L'intérêt majeur de la solution proposée est qu'elle permet une combinaison avec un fond escamotable offrant une grande facilité de manoeuvre dans l'opération de déchargement du bac. En effet, contrairement aux solutions classiques, le fond escamotable du bac collecteur peut être démonté en un tour de main, et le travail peut se poursuivre sans qu'il soit nécessaire de monter un déflecteur.

Selon une forme d'exécution préférée de l'invention, il est prévu un système de verrouillage visant à bloquer le fond escamotable en position fermée. En effet, sur des pelouses normales, il y a des reliefs (bosses, monticules dus aux taupes, pierres, etc.) de telle sorte que la tondeuse "saute". Ceci provoque des vibrations du fond escamotable par rapport à son support et peut provoquer une ouverture de quelques centimètres qui serait suffisante pour que de l'herbe coupée tombe à terre. Le système de verrouillage est conçu de manière qu'avant d'ouvrir le bac, un déverrouillage soit nécessaire en actionnant une commande, par exemple un bouton. Après le déchargement du bac, on rabaisse le fond escamotable du bac et le système de verrouillage se remet automatiquement en place.

De plus, la fenêtre de contrôle du remplissage qui est disposée dans ce "plafond", contrairement à ce qui se produit selon l'état de la technique, ne se recouvre pas intérieurement d'herbe projetée qui reste collée, et elle garde donc sa transparence et peut assumer sa fonction.

Il est intéressant de profiter ainsi d'un volume accrû pour recueillir l'herbe, mais la forme et la conception modifiées du bac collecteur permettent également, pour un même porte-à-faux du bac collecteur par rapport à la partie arrière de la tondeuse et pour un volume accrû disponible, de disposer de manière plus favorable pour l'ouverture le point de pivotement du fond escamotable du bac lorsque l'on a recours à cette solution conformément à la forme d'exécution préférée de l'invention.

On peut donc résumer comme suit les avantages essentiels des solutions proposées selon l'invention :
- le volume accrû par rapport aux solutions classiques pour un même porte-à-faux (débordement) par rapport à l'arrière de la tondeuse;
- la qualité de la coupe;
- la facilité de déchargement du bac collecteur
- la possibilité d'un verrouillage;
- la facilité de démontage du bac collecteur sans nécessité d'utiliser un déflecteur;
- la propreté de la fenêtre.

D'autres détails et caractéristiques de l'invention apparaîtront dans la description qui suit de cette forme d'exécution préférée de l'invention.

### Description d'une forme d'exécution préférée de l'invention

Il convient de noter que le principe général de l'invention s'applique aussi bien aux bacs collecteurs à fond escamotable qu'aux bacs classiques anciens qui doivent être soulevés lorsque l'on souhaite les vider, étant entendu que selon l'invention, on accorde la préférence a la première forme d'exécution.

Etant donné que la solution d'un fond escamotable est celle qui permet le mieux d'exploiter les possibilités de l'invention, celle-ci sera décrite en référence à un bac à fond escamotable, qui est apparu dans la pratique être une solution particulièrement efficace pour les utilisateurs.

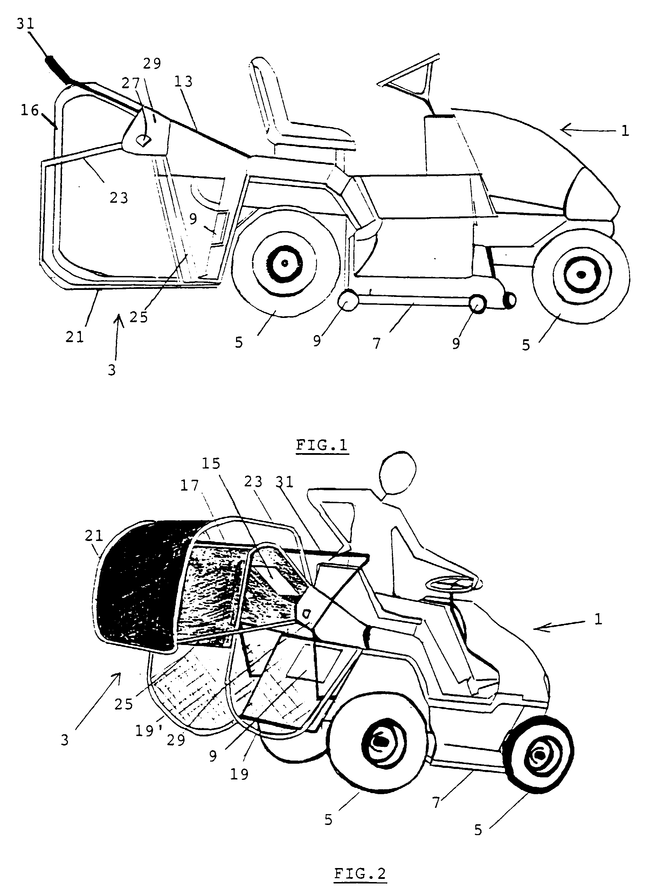

Dans les figures 1 et 2, on a représenté une tondeuse du type mentionné portant le repère général 1 équipée d'un bac collecteur selon l'invention portant le repère général 3. Entre les roues 5 de la tondeuse se trouve disposée l'équipement de coupe 7. Cet équipement est relevable dans la position représentée, mais lors de son utilisation, en position de coupe, il repose par de petits galets qui suivent la forme du terrain. L'herbe récoltée depuis cette position basse est expulsée par les lames de coupe vers une gaine (canal d'éjection) disposée sous le siège du conducteur entre les deux roues arrière et qui débouche dans une ouverture 9 à l'arrière du véhicule.

Généralement, des consoles solidaires de la carrosserie sont montées à l'arrière du véhicule afin de pouvoir y accrocher un bac collecteur qui est pourvu de moyens d'accrochage adéquats.

La gaine (canal d'éjection) 9, de l'avant vers l'arrière, est inclinée vers le haut de manière que l'herbe coupée et pénétrant dans la gaine (canal d'éjection) 9 pratiquement à hauteur de coupe soit projetée vers le haut, à la partie supérieure du bac collecteur 3.

L'herbe serait, dans les solutions classiques, projetée de ce fait contre le plafond du bac, c'est-à-dire contre sa partie supérieure, et retomberait dans celui-ci.

Une partie de l'herbe, en particulier si elle est humide, reste alors collée au plafond, et en particulier lorsqu'une fenêtre d'inspection 15 est prévue à la partie supérieure du bac collecteur, elle obture instantanément la vue et rend donc inopérante cette fenêtre.

Pour éviter cette difficulté et simultanément accroître le volume du bac collecteur sans que le porte-à-faux du bac collecteur 3 (c'est-à-dire la longueur du bac) par rapport à la partie arrière de la tondeuse 1 ne doive être augmenté, il est prévu, selon l'invention, que la partie supérieure 13 du bac collecteur soit disposée dans un plan dont l'inclinaison correspond sensiblement à l'angle que forme la gaine (canal d'éjection) 9 par rapport à l'horizontale. En principe, on respecte autant que possible un alignement de l'inclinaison par rapport à cet angle de la gaine mais des différences de l'ordre de 10 degrés et de préférence 5 degrés par rapport à l'alignement sont admissibles.

Comparé à un bac collecteur dont la partie supérieure 13 serait sensiblement horizontale, on dispose donc d'un volume accrû mais surtout, l'herbe est projetée pratiquement sans toucher la partie supérieure jusqu'au fond 16 supérieur arrière sensiblement vertical du bac collecteur 3.

Lors de son utilisation, le bac collecteur selon l'invention peut être utilisé en position ouverte (relevée) du fond escamotable, ce qui permet si l'on souhaite d'épandre l'herbe sur le sol, ou en position fermée si l'on souhaite la ramasser au fur et à mesure de la coupe. En position fermée, une capacité de plus de 400 litres est facilement réalisable, ce qui évite les arrêts fréquents pour vider le bac, tout en favorisant une meilleure coupe, un ramassage parfait, une grande facilité de déchargement et de nettoyage.

Dans la forme d'exécution représentée, le bac collecteur 3 est constitué d'une part par une tôle pliée et arrondie 17, par deux joues latérales 19 et 19' verticales, de préférence en métal déployé, c'est-à-dire ajouré, qui sont solidaires de cette tôle 17, ainsi que par un "fond" escamotable 21 qui, en position de coupe, referme le bac collecteur 3 (voir figure 1) et dont la forme est conçue de manière à s'adapter pour compléter le bac collecteur en venant s'appuyer sur la partie inférieure et arrière des joues 19 et 19'. Le fond 21 est lui-même de préférence réalisé en une tôle pliée et arrondie judicieusement conformée pour s'adapter aux joues 19 et 19' . Le fond 21 est maintenu par deux paires de membrures respectivement 23 et 25 et 23' et 25' . Les deux membrures de la première paire 23 et 25 et les deux membrures de la deuxième paire 23' et 25' sont disposées extérieurement de part et d'autre du bac dont elles font partie, à l'extérieur des joues 19 et 19'.

Les membrures de la première paire 23 et 25 visibles dans les figures se rejoignent sur un flasque 29 monté de manière à pouvoir pivoter sur un axe de pivotement ou un tourillon 27 porté par la partie supérieure 13 du bac collecteur. Il en est de même, symétriquement, pour la deuxième paire de membrures 23' et 25' sur le côté du bac collecteur 3 où le flasque n'est pas visible dans les figures.

Sur les flasques, une barre de manoeuvre 31 est montée qui permet à l'opérateur, en tirant vers lui la barre de manoeuvre 31, d'escamoter le fond 21 du bac collecteur 3 et de le vider, depuis son siège.

Tout système de verrouillage adéquat peut convenir pour que le flasque 29 soit bloqué dans la position fermée du bac collecteur, en empêchant la libre rotation (en position verrouillée) de ce flasque 29 sur l'axe de pivotement 27. Le verrouillage peut être conçu pour permettre ce verrouillage non seulement dans la position fermée du bac mais également dans la position totalement escamotée du tond lorsque l'on souhaite épandre l'herbe sans la ramasser, par exemple pour servir à améliorer le sol, et ceci sans devoir utiliser un déflecteur.

Le système de verrouillage est de préférence commandé à distance depuis le siège du conducteur. On a illustré schématiquement par le repère 31 un tel élément de verrouillage qui bloque la rotation du flasque 29.

Bien qu'on ait décrit des formes d'exécution préférées de l'invention, il doit être entendu que de nombreux perfectionnements et modifications peuvent encore y être apportés.

## Revendications

1. Bac collecteur destiné aux tondeuses à gazon à siège ou tondeuses autoportées, caractérisé en ce que sa partie supérieure (13) est disposée dans un plan dont l'inclinaison correspond à l'angle par rapport au plan des roues que forme la gaine (canal d'éjection) (9) par laquelle de l'herbe coupée par les lames de coupe est expulsée depuis les lames de coupe vers le bac collecteur (3).

2. Bac collecteur selon la revendication 1, caractérisé en ce que l'herbe coupée est projetée sur le fond arrière (16) sensiblement vertical du bac en évitant ainsi le dépôt d'herbe coupée sur le plafond du bac.

3. Bac collecteur selon la revendication 1 ou 2, caractérisé en ce que le plafond est muni d'une fenêtre (9).

4. Bac collecteur selon l'une quelconque des revendications précédentes, caractérisé en ce que, pour un même porte-à-faux du bac collecteur par rapport à la partie arrière de la tondeuse, on dispose d'un volume utile de remplissage supérieur à celui des bacs collecteurs classiques dont la partie supérieure est sensiblement horizontale.

5. Bac collecteur selon l'une quelconque des revendications précédentes, caractérisé en ce que le bac collecteur (3) est un bac à fond (21) escamotable.

6. Bac collecteur selon la revendication 5, caractérisé en ce qu'il est constitué d'une part par une tôle pliée et arrondie (17), par deux joues latérales (19, 19') verticales solidaires de cette tôle (17), ainsi que du fond escamotable (21) qui, en position de coupe, referme le bac collecteur (3) et dont la forme est conçue de manière à s'adapter pour compléter le bac collecteur en venant s'appuyer sur la partie inférieure et arrière des joues (19, 19').

7. Bac collecteur selon la revendication 6, caractérisé en ce que fond (21) est réalisé en une tôle pliée et arrondie conformée pour s'adapter aux joues (19, 19').

8. Bac collecteur selon la revendication 7, caractérisé en ce que le fond (21) est maintenu par deux paires de membrures (23 et 25; 23' et 25'), les membrures d'une première paire (23, 25) et les membrures d'une deuxième paire (23', 25') étant disposées extérieurement de part et d'autre du bac dont elles font partie, à l'extérieur des joues (19, 19').

9. Bac collecteur selon la revendication 8, caractérisé en ce que les membrures (23 et 25; 23' et 25') se rejoignent par paires respectives sur un flasque (29) monté de manière à pouvoir pivoter sur un axe de pivotement ou tourillon (27) porté par la partie supérieure (13) du bac collecteur (3).

10. Bac collecteur selon la revendication 9, caractérisé en ce qu'une barre de manoeuvre (31) est montée sur les flasques (29) afin de permettre à l'opérateur d'escamoter le fond (21) depuis son siège.

11. Bac collecteur selon l'une quelconque des revendications 6 à 10, caractérisé en ce que les joues latérales (19, 19') sont ajourées, de préférence réalisées en un métal déployé ou en treillis.

12. Bac collecteur selon l'une quelconque des revendications précédentes, caractérisé en ce que l'air éjecté qui entraîne l'herbe coupée est propulsé vers la partie arrière du bac collecteur (3), assurant une coupe de meilleure qualité.
